# EUROPÄISCHE PATENTSCHRIFT

(11) **EP 3 411 276 B1**
(45) Veröffentlichungstag und Bekanntmachung des Hinweises auf die Patenterteilung: **01.04.2020**
(21) Anmeldenummer: 17702623.4
(22) Anmeldetag: 01.02.2017
(51) Int. Cl.: B60W 30/09, B60W 30/095

(54) **FAHRERASSISTENZSYSTEM**
DRIVER ASSISTANCE SYSTEM
SISTÉME DE SUPPORT DU CONDUCTEUR

(30) Priorität: 03.02.2016 DE 102016101901
(43) Veröffentlichungstag der Anmeldung: 12.12.2018
(73) Patentinhaber: Deutsches Zentrum für Luft- und Raumfahrt e.V., 51147 Köln (DE)
(72) Erfinder: KLARNER, Robert, 80331 München (DE); RUNGE, Hartmut, 81377 München (DE)
(74) Vertreter: Rösler Rasch van der Heide & Partner
(86) Internationale Anmeldenummer: PCT/EP2017/052148
(87) Internationale Veröffentlichungsnummer: WO 2017/134102

(56) Entgegenhaltungen:
- DE-A1-102009 045 921
- DE-A1-102012 000 896
- DE-A1-102013 220 487
- US-A1- 2003 149 530
- US-A1- 2014 032 108

## Beschreibung

Die Erfindung betrifft ein Fahrerassistenzsystem zur Unterstützung eines Fahrers beim Betrieb eines Fahrzeugs in einem Verkehrswegenetz durch eine Unterstützungsfunktion, sowie ein Verfahren zur Unterstützung eines Fahrers beim Betrieb eines Fahrzeugs in einem Verkehrswegenetz durch eine Unterstützungsfunktion.

Fahrerassistenzsysteme unterstützen den Fahrer bei der Führung eines Fahrzeugs insbesondere auch abhängig von Informationen über die aktuelle Umgebung des Fahrzeugs. Diese Umgebung unterliegt einem zeitlichen Wandel. So können an Fahrbahnen temporär Baustellen eingerichtet werden, eine Fahrbahn kann durch einen umgestürzten Lkw blockiert sein, etc. Derartige Veränderungen der lokalen Umgebung können nicht oder nur mit einer zeitlichen Verzögerung erfasst und den Fahrerassistenzsystemen von Fahrzeugen zur Berücksichtigung zur Verfügung gestellt werden. Eine Vielzahl von Unterstützungsfunktionen von Fahrerassistenzsystemen sind jedoch vom Vorliegen zuverlässiger Umgebungsdaten abhängig. DE 10 2009 045 921 A1 offenbart ein gattungsbildendes Fahrassistenzsystem.

Die Aufgabe der Erfindung ist es, ein Fahrerassistenzsystem zur Verfügung zu stellen, das eine verbesserte Unterstützungsfunktion bereitstellt, die aktuelle, insbesondere plötzlich auftretende Umgebungssituationen eines Fahrzeugs berücksichtigt.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Aufgabe ist mit einem Fahrerassistenzsystem zur Unterstützung eines Fahrers beim Betrieb eines Fahrzeugs F in einem Verkehrswegenetz durch eine Unterstützungsfunktion UF gelöst. Das vorgeschlagene Fahrerassistenzsystem umfasst eine erste Schnittstelle zur Bereitstellung von Navigationsdaten *ND* zu dem Verkehrswegenetz; eine Positionserfassungseinheit zur Erfassung einer Position *PF* des Fahrzeugs F; eine zweite Schnittstelle zur Bereitstellung von zumindest folgenden ersten Daten *D1* zu Objekten *O1ᵢ,* die entlang von Verkehrswegen des Verkehrswegenetzes angeordnet sind, mit *i* = *1, 2,..., I, I ≥ 1:* Objektart *OA(O1ᵢ),* Position POS(O1ᵢ) und Gefährdungsindex *INDEX(O1ᵢ)*; die zweite Schnittstelle ist eine Schnittstelle zu einer im Fahrzeug angeordneten Speichereinheit, auf der die ersten Daten D1 gespeichert sind, oder eine Schnittstelle zu einer Empfängereinheit, die die ersten Daten D1 von einem Zentralrechner drahtungebunden empfängt; ein Sensorsystem, mit dem an der Position *PF* eine (aktuelle) Umgebung des Fahrzeugs *F* zur Erzeugung von Umgebungsdaten *U(PF)* abtastbar ist; eine erste Auswerteeinheit, mit der auf Basis der Umgebungsdaten *U(PF)* Daten *D2* zu Objekten *O2ₗ* ermittelbar sind, wobei die Daten *D2* zu den Objekten *O2ₗ* zumindest folgende Informationen umfassen, *mit l* = *1, 2,..., L, L ≥ 0*: Objektart *OA(O2ₗ),* Position *POS(O2ₗ)* und Gefährdungsindex *INDEX(O2ₗ),* wobei der *INDEX(x)* jeweils eine Gefährdung des Fahrzeugs *F* und/oder seiner Insassen bei einer Kollision des Fahrzeugs mit dem jeweiligen Objekt *x* angibt; eine Fusionseinheit zum Abgleich und zur Fusion der ersten Daten *D1* und der zweiten Daten *D2* zu dritten Daten *D3 = D3(D1, D2),* wobei die dritten Daten Objekte *O3_{y}* betreffen, die sich durch den Abgleich und die Fusion der ersten Daten *D1* und der zweiten Daten *D2* aus den Objekten *O1ᵢ* und *O2ₗ* ergeben, mit *v* = *1, 2,* ... *V, V ≥ 1, V ≤ I* + *L,* und *O3ᵥ* ∈ *{O1ᵢ, O2ₗ},* und wobei für die Objekte *O3ᵥ* basierend auf den Gefährdungsindizes *INDEX(O1ᵢ)* und *INDEX(O2ₗ)* Gefährdungsindizes *INDEX(O3ᵥ)* zugewiesen werden; und eine Steuer- und/oder Regeleinheit zur Ausführung der zumindest einen Unterstützungsfunktion *UF,* wobei die Unterstützungsfunktion *UF* abhängig von den dritten Daten und den Navigationsdaten ND ausgeführt wird *UF* = *UF(D3, ND).*

Das Fahrzeug ist bevorzugt ein Kraftfahrzeug, beispielsweise ein PKW, ein LkW oder ein Bus.

Der Begriff "Unterstützungsfunktion" wird vorliegend weit gefasst verstanden. Er umfasst insbesondere eine oder mehrere der folgenden Funktionen: eine Ausgabe einer Information (Warnung, Hinweis, optisch, akustisch, haptisch), eine Aktivierung oder eine Deaktivierung eines Fahrzeugsystems oder einer Fahrzeugfunktion, einen autonomen Eingriff in die Längs- und/oder Quersteuerung/-regelung des Fahrzeugs. Diese Liste ist natürlich nicht abschließend sondern gibt lediglich einige Beispiele von Gruppen von Unterstützungsfunktionen an. Insbesondere betrifft die Erfindung derartige Unterstützungsfunktionen, die irgendeinen Bezug zu einer aktuellen Fahrzeugumgebung aufweisen.

Die Navigationsdaten *ND* umfassen vorteilhaft eine oder mehrere der folgenden topographischen Informationen zum Verkehrswegenetz: Verlauf, Breite, Kategorie (bspw. Autobahn, Landstraße, Ortsstraße, Feldweg, etc.) der Verkehrswege; Anzahl der Fahrspuren eines jeweiligen Verkehrsweges; Kreuzungen; Abzweigungen; Unter- oder Überführungen; Orte von Infrastruktureinrichtungen (Tankstellen, Krankenhäuser, Bahnhöfe, Flugplätze, Post, Hotels, Denkmäler, etc.); für den jeweiligen Abschnitt der Verkehrswege geltende Gebote, Verkehrsbeschränkungen, etc.; Orte und Arten von Ampelanlagen, Hinweisschilder; Geländehöhen, einschließlich Unebenheiten der Erdoberfläche, bspw. Gräben, Bodenwellen; Fahrbahnbegrenzungen, wie beispielsweise Bordsteine, Leitplanken, Betonelemente; Art der Erdoberfläche (dies bezieht sich sowohl auf die Fahrbahn selbst wie auch die die Fahrbahn angrenzende Umgebung) bspw. Wasser, Schnee, Eis, Sand, Asphalt, Beton, Sand, Kies, Bewuchs, Rasen, etc.; eine Klassifizierung einer jeweiligen seitlichen Umgebung eines Verkehrsweges hinsichtlich des jeweiligen Geländehöhenprofils der seitlichen Umgebung (beispielsweise einseitig stark abgefallenes Gelände in eine Schlucht bzw. einseitig stark ansteigendes Gelände beispielsweise Felswand); eine Klassifizierung der seitlichen Umgebung eines Verkehrsweges hinsichtlich der Art der Erdoberfläche; eine Klassifizierung der seitlichen Umgebung eines Verkehrsweges hinsichtlich einer Nutzbarkeit für das Fahrzeug als Manöverbereich. Diese Aufzählung ist nicht abschließend.

Vorteilhaft liegen die topographischen Informationen auch für einen Bereich einer seitlichen Umgebung unmittelbar entlang der Verkehrswege des Verkehrswegenetzes vor, wobei die seitliche Umgebung auf jeder Seite der Verkehrswege durch einen Streifen definiert ist, der eine Streifenbreite *A* aufweist, wobei *A* aus dem Bereich [0, 500 m] gewählt ist und insbesondere 50 m, 100 m oder 250 m beträgt. Diese Einschränkung reduziert insbesondere die bereitzuhaltende bzw. zu verarbeitende Datenmenge. Natürlich können entsprechende topographische Informationen für die gesamte Erdoberfläche des Verkehrswegenetzes im Rahmen der Navigationsdaten ND bereitgestellt werden.

Die Positionserfassungseinheit ist vorteilhaft zur Ermittlung der Position *PF* auf Basis von Satellitennavigation ausgeführt, und umfasst einen Navigationsempfänger, der die Position PF auf Basis des GPS-, Galileo-, oder GLONASS-Satellitennavigationssystems ermittelt. Alternativ oder zusätzlich kann die Positionserfassungseinheit im Stand der Technik bekannte alternative Verfahren zur Positionsermittlung verwenden.

Die Speichereinheit kann beispielsweise eine CD ROM/RAM ein Festplattenspeicher oder ein variabler temporärer Speicher sein. Die Objekte *O1ᵢ,* und die diese Objekte *O1ᵢ* betreffenden Informationen werden vorteilhaft durch Sensorsysteme bei Befahrung oder Befliegungen der betreffenden Bereiche erfasst. Entsprechende Sensorsysteme sind beispielsweise optische Kamerasysteme, Radar-Systeme, LIDAR-Systeme oder Kombinationen daraus. Vorteilhaft sind die Objekte *O1ᵢ* dauerhaft, d.h. über einen längeren Zeitraum, beispielsweise > eine Woche oder > einen Monat an der zugeordneten Position *POS(O1ᵢ)* angeordnet. Das Erfassen der Objekte *O1ᵢ,* die nachgeordnete Auswertung der dabei erfassten Daten und die erforderliche Verteilung der Daten *D1* an entsprechende Fahrerassistenzsysteme bedingt eine Zeitverzögerung vom Erfassen bis zur Bereitstellung der Daten *D1* an die Fahrerassistenzsysteme von Fahrzeugen. Somit geben die Daten *D1* nicht die aktuelle Situation von entlang der Verkehrswege angeordneten Objekten an.

Der Begriff "Objekte *O1ᵢ*" ist vorliegend weit gefasst zu verstehen. Er umfasst vorteilhaft alle entlang von Verkehrswegen des Verkehrswegenetzes angeordneten Objekte *O1ᵢ* und gibt deren Objektart *OA(O1ᵢ),* deren Position *POS(O1ᵢ)* und deren Gefährdungsindex *INDEX(O1ᵢ)* an. Der *INDEX(O1ᵢ)* gibt jeweils eine Gefährdung des Fahrzeugs *F* und/oder seiner Insassen bei einer Kollision des Fahrzeugs mit dem jeweiligen Objekt *O1ᵢ* an. In einer vorteilhaften Variante nimmt die Gefährdung des Fahrzeugs *F* und/oder seiner Insassen bei einer Kollision des Fahrzeugs *F* mit einem Objekt *O1ᵢ* bei steigendem Indexwert *INDEX(O1ᵢ)* zu. Vorteilhaft ist der Indexwert normiert, beispielsweise auf 1 oder 100.

Vorteilhaft umfasst das vorgeschlagene Fahrerassistenzsystem eine Speichereinheit zur Speicherung der ersten Daten *D1* und eine Empfangseinheit, mittels der via eine mobile Datenübertragung von einem Zentralserver erste Daten *D1** zur Aktualisierung der auf der Speichereinheit gespeicherten ersten *D1* übermittelbar sind. So können bei einem Zentralserver Informationen zu den ersten Daten zentral gesammelt, ausgewertet und an Fahrzeuge bzw. deren Fahrerassistenzsysteme übermittelt werden. Die für die Fahrerassistenzsysteme der Art bereitgestellten ersten Daten *D1* verfügen dadurch über eine verbesserte Aktualität.

Das Sensorsystem ermöglicht die Erfassung einer aktuellen Umgebung des Fahrzeugs an der jeweiligen Position *PF* des Fahrzeugs und die Erzeugung von Umgebungsdaten *U(PF).* Das Sensorsystem umfasst vorzugsweise eines oder mehrere der folgenden Systeme: Kamerasystem, Infrarotsystem, LIDAR-System, RADAR-Systeme, SODAR-Systeme, Ultraschallsystem. Das Sensorsystem dient der Erfassung und/oder Abtastung einer Fahrzeugumgebung. Vorteilhaft erfolgt die Abtastung der Umgebung des Fahrzeugs kontinuierlich, sodass zu jeder Zeit *t* jeweils aktuelle Umgebungsdaten *U(PF, t)* erzeugt werden. Vorteilhaft werden die vom Sensorsystem erfassten Umgebungsdaten *U(PF)* hinsichtlich einer oder mehrerer der folgenden Informationen ausgewertet: 3D-Form der Objekte *O2ₗ,* Art der Objekte *O2ₗ,* relative Positionierung der Objekte *O2ₗ* zum Fahrzeug, dynamischer Zustand der Objekte *O2ₗ*, meteorologischer Zustand in der Fahrzeugumgebung, Art und Zustand der Erdoberfläche in der Fahrzeugumgebung, Art und Zustand des vom Fahrzeug *F* befahrenen Verkehrswegs.

Die vorzugsweise kontinuierlich erzeugten Umgebungsdaten *U(PF, t)* werden von der ersten Auswerteeinheit ausgewertet. Dabei werden in den Umgebungsdaten *U(PF, t)* abgebildete Objekte *O2ₗ* ermittelt. Weiterhin wird die Objektart *OA(O2ₗ)* der Objekte *O2ₗ* ermittelt. Die Objektart *OA(O2ₗ)* gibt dabei an, um welche Art Objekt es sich handelt, beispielsweise um einen Felsbrocken, ein Auto, eine Leitplanke, einen Baum, eine Litfaßsäule, eine Ampelanlage, einen Brückenpfeiler, eine Kiesfläche, einen Bordstein, einen Menschen, einen Radfahrer, ein Reh etc. Diese Auswertung basiert vorteilhaft auf bekannten Bildauswertealgorithmen und einer entsprechende Referenzdatenbank. Neben der Objektart *OA(O2ₗ)* werden die Umgebungsdaten *U(PF, t)* auch hinsichtlich der Position *POS(O2ₗ)* der jeweiligen Objekte *O2ₗ* ausgewertet. Die Position wird vorteilhaft relativ zum Fahrzeug oder absolut, auf Basis der im Fahrzeug bekannten Position *PF* ermittelt. Schließlich wird für die erkannten Objekte *O2ₗ* ein Gefährdungsindex *INDEX(O2ₗ)* ermittelt, der jeweils eine Gefährdung des Fahrzeugs *F* und/oder seiner Insassen bei einer Kollision des Fahrzeugs mit dem jeweiligen Objekt *O2ₗ* angibt.

Vorteilhaft werden die Gefährdungsindizes *INDEX(O2ₗ)* für die jeweiligen Objekte *O2ₗ* abhängig von der ermittelten Objektart *OA(O2ₗ)* ermittelt: *INDEX(O2ₗ) = INDEX(OA(O2ₗ)).* Vorteilhaft werden die Gefährdungsindizes *INDEX(O2ₗ)* als Look-Up-Tabelle bereitgestellt.

Die von dem Sensorsystem ermittelten Daten *D2* geben somit den aktuellen Zustand der Fahrzeugumgebung wieder. Haben sich für einen Fahrbahnabschnitt, für den die Daten *D1* bekannt sind, in der Zeit bis zur Erfassung der Umgebungsdaten *U(PF,t)* keine Änderungen hinsichtlich der dort angeordneten Objekte *O1ᵢ* ergeben und ist das Sensorsystem der Art eingerichtet und ausgeführt, dass alle diese Objekte *O1ᵢ* erfasst werden, ergibt sich: *i* = *l, I* = *L* und *O1ᵢ* = *O2ₗ.* Typischerweise ergeben sich jedoch Änderungen der in der Umgebung eines Verkehrswegs angeordneten Objekte mit der Zeit, so dass gilt: *I ≠ L.* In diesen Fällen erfasst das Sensorsystem in den erfassten Umgebungsdaten *U(PF,t)* mehr oder weniger oder andere Objekte als in den bereitgestellten Daten *D1.*

Die Fusionseinheit dient nun zum Abgleich und zur Fusion der ersten Daten *D1* und der zweiten Daten *D2* zu dritten Daten *D3 = D3(D1, D2),* wobei die dritten Daten *D3* Objekte *O3_{y}* betreffen, die sich durch den Abgleich und die Fusion der ersten Daten *D1* und der zweiten Daten *D2* aus den Objekten *O1ᵢ* und *O2ₗ* ergeben. Bei der "Fusion" handelt es sich vorliegend um eine Datenfusion, bei der es darum geht, alle verfügbaren Informationen der Daten *D1* und *D2* zu nutzen, um ein aktuelles Bild bzw. ein aktuellen Zustand der Fahrzeugumgebung hinsichtlich der aktuell darin angeordneten Objekte zu ermitteln. Bei der Datenfusion haben vorteilhaft die Informationen der Daten D2 Vorrang gegenüber den Daten D1, d.h. wird in den Daten D2 ein Objekt O2ₗ erkannt, dass in den Daten D1 nicht enthalten ist, so wird es als ein Objekt O3_{y} in den dritten Daten D3 berücksichtigt. Wird hingegen in den Daten D2 ein Objekt O2ₗ nicht erkannt, dass in den Daten D1 enthalten ist, so wird es nicht als ein Objekt O3_{y} in den dritten Daten D3 berücksichtigt.

Durch geeignete Datenfusionsverfahren und entsprechende Abgleichsfilter können dritte Daten D3 ermittelt werden, die ein tatsächliches Bild der in der Fahrzeugumgebung angeordneten Objekte O3_{y} bzw. deren Objektarten OA(O3_{y}) liefern. Die Zuverlässigkeit des Fahrerassistenzsystems wird dadurch erhöht, Mehrdeutigkeiten können weitgehend ausgeschlossen werden.

Den Objekten *O3ᵥ* werden basierend auf den Gefährdungsindizes *INDEX(O1ᵢ)* und *INDEX(O2ₗ)* Gefährdungsindizes *INDEX(O3ᵥ)* zugewiesen. Dies erfolgt vorzugsweise durch Übernahme der für die jeweiligen Objekte bereits bekannten Indizes: *INDEX(O1ᵢ)* oder *INDEX(O2ₗ),* d. h. für ein gegebenes Objekt, das beispielsweise in den Daten D1 als O1ᵢ₌₂, in dem Daten D2 als O2ₗ₌₅ bezeichnet ist, wird das Objekt O3ᵥ₌₃. Die zugehörigen Gefährdungsindizes haben beispielsweise folgende Werte: *INDEX(O1ᵢ₌₂)*= *3, INDEX(O2ₗ₌₅)*= 4, wobei vorliegend ein höherer Gefährdungsindexwert eine höhere Gefährdung des Fahrzeugs bzw. seiner Insassen bei einer Kollision des Fahrzeugs mit dem Objekt angibt. Vorzugsweise wird in diesem Beispiel dem Objekt O3ᵥ₌₃ der Indexwert *INDEX(O2ᵥ₌₃)*= 4 zugeordnet.

Schließlich wird durch die Steuer- und/oder Regeleinheit die Unterstützungsfunktion *UF* abhängig von den dritten Daten und den Navigationsdaten *ND* ausgeführt *UF* = *UF(D3, ND).*

Vorteilhaft sind die Gefährdungsindizes *INDEX(O1ᵢ)* für die jeweiligen Objekte *O1ᵢ* auf Basis eines oder mehrerer der folgenden Parameter ermittelt: Form des Objekts *O1ᵢ,* Ausdehnung des Objekts *O1ᵢ,* Masse des Objekts *O1ᵢ,* Steifigkeit Objektes *O1ᵢ,* Entfernung des Objekts zur Strasse, relative Anordnung des Objekts zu benachbarten Objekten und zur Straße.

In dem Fall, dass für ein Objekt *O2ₗ* kein eindeutiger Gefährdungsindex *INDEX(O2ₗ)* ermittelbar ist, wird dem jeweiligen Objekt *O2ₗ* vorteilhaft ein *INDEX(O2ₗ)* zugeordnet, der dem Indexwert mit der höchsten Gefährdung des Fahrzeugs *F* und/oder seiner Insassen bei einer Kollision des Fahrzeugs mit dem jeweiligen Objekt *O2ₗ* entspricht. Dies entspricht der Philosophie, gemäß der bei unklaren Verhältnissen die größtmöglichen Sicherheitsanforderungen gelten sollen.

Eine vorteilhafte Weiterbildung des vorgeschlagenen Fahrerassistenzsystems zeichnet sich dadurch aus, dass eine zweite Auswerteeinheit zur Ermittlung von für das Fahrzeug *F* in seiner aktuellen Umgebung gefahrlos nutzbaren Freiflächen *FFₚ* vorhanden ist, mit *p* = *1, 2*,..., wobei die zweite Auswerteeinheit die nutzbaren Freiflächen *FFₚ* unter Berücksichtigung der Navigationsdaten *ND* und/oder der ersten Daten *D1* und/oder der zweiten Daten *D2* und/oder der dritten Daten *D3* ermittelt, und die Unterstützungsfunktion *UF* abhängig von den ermittelten Freiflächen *FFₚ* ausgeführt wird *UF = UF(D3, ND, FFₚ).*

Die zweite Auswerteeinheit greift vorteilhaft auf die vom Sensorsystem erfassten Umgebungsdaten *U(PF,t)* zurück. Die Ermittlung von für das Fahrzeug F gefahrlos nutzbaren Freiflächen *FFₚ* erfolgt vorteilhaft auf Basis einer entsprechenden Bilddatenauswertung, gegebenenfalls kombiniert mit entsprechenden Entfernungsdaten der Umgebungsdaten *U(PF,t).*

Eine vorteilhafte Weiterbildung des vorgeschlagenen Fahrerassistenzsystems zeichnet sich dadurch aus, dass die erste Einheit eine Korrespondenzprüfung der ersten Daten *D1* und der zweiten Daten *D2* ausführt und bei Widersprüchen den jeweiligen zweiten Daten *D2* Priorität einräumt. So kann gewährleistet werden, dass stets den aktuellsten Daten Vorrang gegeben wird. Es versteht sich von selbst, dass hierzu die zweiten Daten *D2* über eine entsprechend hohe Zuverlässigkeit verfügen müssen.

Eine vorteilhafte Weiterbildung des vorgeschlagenen Fahrerassistenzsystems zeichnet sich dadurch aus, dass eine dritte Schnittstelle einen aktuellen Fahrzustand *Z(t)* des Fahrzeugs bereitstellt, eine dritte Einheit basierend auf dem Fahrzustand *Z(t)* ermittelt, ob der Fahrzustand *Z(t)* ein sicherer oder ein unsicherer Fahrzustand ist und im Falle, dass die dritte Einheit einen unsicheren Fahrzustand ermittelt, die Steuer- und/oder Regeleinheit eine Unterstützungsfunktion *UF* ausführt, bei der ein autonomer Eingriff in die Längs- und/oder Quersteuerung/-regelung des Fahrzeugs *F* derart erfolgt, dass eine prädizierte Kollision des Fahrzeugs *F* mit in der Umgebung des Fahrzeugs *F* befindlichen Objekten *O3ᵥ* verhindert wird oder sofern dies nicht möglich ist, eine kontrollierte Kollision des Fahrzeugs *F* mit einem in Betracht kommenden Objekt *O3ᵥ* in der Fahrzeugumgebung gezielt herbeigeführt wird, das den relativ geringsten Gefährdungsindexwert *INDEX(O3ᵥ)* aufweist.

Der Fahrzustand *Z(t)* umfasst vorteilhaft alle wesentlichen dynamischen Größen des Fahrzeugs wie: Position, Geschwindigkeit, Beschleunigung, sowie Lenkwinkel, Lenkwinkelgeschwindigkeit, Lenkwinkelbeschleunigung, Masse des Fahrzeugs, gewählter Gang, Bremszustand, etc.. Vorteilhaft umfasst der Fahrzustand *Z(t)* des Fahrzeugs *F* auch Umweltbedingungen wie beispielsweise die aktuelle Haftreibung/ Rollreibung/ Gleitreibung der Räder, Umgebungstemperatur, und die Umgebungsfeuchte. Vorliegend sei ein "sicherer Fahrzustand *Z(t)"* ein Zustand, in dem das Fahrzeug F vom Fahrer und/oder von einem Fahrerassistenzsystem sicher auf der Fahrspur manövriert werden kann. Ein "unsicherer Fahrzustand *Z(t)"* ist beispielsweise ein Zustand, in dem das Fahrzeug *F* droht, weder vom Fahrer noch von einem Fahrerassistenzsystem sicher auf der Fahrspur manövriert werden zu können, sondern das Fahrzeug F droht mehr oder weniger unkontrolliert vom vorgesehenen Fahrweg abzuweichen. Der Eingriffszeitpunkt des autonomen Längs- bzw. Querregelungseingriffs wird definiert durch die vorgegebenen Merkmale des "unsicheren Fahrzustands *Z(t)".* Vorteilhaft sind die Merkmale, die einen "unsicheren Fahrzustand *Z(t)"* definieren, durch den Fahrer aus einer Liste auszuwählen bzw. vorzugeben. Damit wird eingestellt, ob der autonome Längs- bzw. Querregelungseingriff bereits in einem Zustand erfolgt, die das Fahrzeug nie in einen tatsächlich unsicheren Fahrzustand gelangen lässt. Andererseits kann der "unsichere Fahrzustand *Z(t)"* auch derart definiert werden, dass der autonome Längs- bzw. Querregelungseingriff erst dann erfolgt, wenn das Fahrzeug beispielsweise aus physikalischen Gründen den beabsichtigten Fahrweg nicht mehr einzuhalten vermag.

Wird nun in dieser Weiterbildung ein solcher "unsicherer Fahrzustand" festgestellt, so erfolgt die Längs- bzw. Quersteuerung des Fahrzeugs derart, dass eine vorteilhaft auf Basis des aktuellen Fahrzustands *Z(t)* und des weiteren Straßenverlaufs prädizierte Kollision mit jedem der entlang der Straßenverlaufs angeordneten Objekte *O3ᵥ* verhindert wird. Für den Fall dass dies nicht möglich sein sollte, was sich ebenfalls aus einer entsprechenden Prädiktion ergibt, wird die Längs- bzw. Quersteuerung des Fahrzeugs derart angesteuert, dass gezielt eine Kollision mit einem der Objekte *O3ᵥ* eingeleitet wird, wobei sich dieses Objekt dadurch auszeichnet, dass die bei der Kollision entstehenden Schäden am Fahrzeug bzw. an den Insassen des Fahrzeugs möglichst minimal sind, d.h. es wird, sofern verfügbar, für die Kollision ein möglichst nachgiebiges, verformbares, leichtes und kleines Objekt *O3ᵥ* wie beispielhaft eine Leitplanke ausgewählt.

Eine vorteilhafte Weiterbildung des vorgeschlagenen Fahrerassistenzsystems zeichnet sich dadurch aus, dass eine Einheit zur Ermittlung einer von der aktuellen Position *PF* des Fahrzeugs F ausgehenden wahrscheinlichsten Fahrtroute *FR* des Fahrzeugs *F,* eine dritte Schnittstelle zur Bereitstellung eines aktuellen Fahrzustands *Z(t)* des Fahrzeugs und eine Prädiktionseinheit vorhanden ist, wobei die Prädiktionseinheit auf Basis der Fahrtroute *FR,* des aktuellen Fahrzustandes *Z(t)* und der dritten Daten *D3* ein Risiko *R* ermittelt, mit *R* = *R(FR, Z(t), D3),* das für die dem Fahrzeug *F* voraus liegende Fahrtroute *FR* eine Wahrscheinlichkeit für ein Auftreten einer kritischen Fahrsituation angibt, wobei das ermittelte Risiko *R* ausgegeben wird und im Fall des Eintretens der kritischen Fahrsituation die Steuer- und/oder Regeleinheit eine Unterstützungsfunktion UF ausführt, bei der ein autonomer Eingriff in die Längs- und/oder Quersteuerung/-regelung des Fahrzeugs *F* derart erfolgt, dass eine prädizierte Kollision des Fahrzeugs F mit in der Umgebung des Fahrzeugs F befindlichen Objekten *O3ᵥ* verhindert wird oder sofern dies nicht möglich ist, eine kontrollierte Kollision des Fahrzeugs F mit einem in Betracht kommenden Objekt *O3ᵥ* in der Fahrzeugumgebung gezielt herbeigeführt wird, das den relativ geringsten Gefährdungsindexwert *INDEX(O3ᵥ)* aufweist.

Dabei wird davon ausgegangen, dass durch das Verhindern einer Kollision mit einem der Objekte *O3ᵥ* durch das automatisch eingeleitete Manöver (automatische Längs- bzw. Quersteuerung des Fahrzeugs) am Fahrzeug F bzw. für die Insassen kein oder nur ein minimaler Schaden steht.

Ein zweiter Aspekt der Aufgabe ist mit einem Verfahren zur Unterstützung eines Fahrers beim Betrieb eines Fahrzeugs *F* in einem Verkehrswegenetz durch eine Unterstützungsfunktion *UF* gelöst. Das vorgeschlagene Verfahren umfasst folgende Schritte. In einem Schritt erfolgt ein Bereitstellen von Navigationsdaten *ND* zu dem Verkehrswegenetz. In einem weiteren Schritt erfolgt ein Erfassen einer Position *PF* des Fahrzeugs *F.* In einem weiteren Schritt erfolgt ein Bereitstellen von zumindest folgenden ersten Daten *D1* zu Objekten *O1ᵢ,* die entlang von Verkehrswegen des Verkehrswegenetzes angeordnet sind, mit *i* = *1, 2,..., I, I ≥ 1:* Objektart *OA(O1ᵢ);* Position *POS(O1ᵢ)* und Gefährdungsindex *INDEX(Olᵢ).* Die ersten Daten D1 werden bereitgestellt von einer im Fahrzeug angeordneten Speichereinheit, oder von einer Empfängereinheit bereitgestellt, die die ersten Daten D1 von einem Zentralrechner drahtungebunden empfängt. In einem weiteren Schritt erfolgt an der Position *PF* ein Abtasten einer aktuellen Umgebung des Fahrzeugs *F* zur Erzeugung von Umgebungsdaten *U(PF).* In einem weiteren Schritt erfolgt auf Basis der Umgebungsdaten *U(PF)* ein Ermitteln von Daten *D2* zu Objekten *O2ₗ*, wobei die Daten *D2* zu den Objekten *O2ₗ* zumindest folgende Informationen umfassen, mit *l* = *1, 2,..., L, L ≥ 0*: Objektart *OA(O2ₗ),* Position *POS(O2ₗ)* und Gefährdungsindex *INDEX(O2ₗ),* wobei der *INDEX(x)* jeweils eine Gefährdung des Fahrzeugs *F* und/oder seiner Insassen bei einer Kollision des Fahrzeugs mit dem jeweiligen Objekt *x* angibt. In einem weiteren Schritt erfolgt ein Abgleichen und ein Fusionieren der ersten Daten *D1* und der zweiten Daten *D2* zu dritten Daten *D3 = D3(D1, D2),* wobei die dritten Daten Objekte *O3_{y}* betreffen, die sich durch den Abgleich und die Fusion der ersten Daten *D1* und der zweiten Daten *D2* aus den Objekten *O1ᵢ* und *O2ₗ* ergeben, mit *v* = *1, 2,* ... *V, V ≥ 1, V ≤ I* + *L, und O3ᵥ ∈ {O1ᵢ, O2ₗ},* und wobei für die Objekte *O3ᵥ* basierend auf den Gefährdungsindizes *INDEX(O1ᵢ)* und *INDEX(O2ₗ)* Gefährdungsindizes *INDEX(O3ᵥ)* zugewiesen werden. Schließlich erfolgt ein Ausführen der zumindest einen Unterstützungsfunktion *UF,* wobei die Unterstützungsfunktion *UF* abhängig von den dritten Daten und den Navigationsdaten *ND* ausgeführt wird: *UF* = *UF(D3, ND).*

Vorteile und vorteilhafte Weiterbildungen ergeben sich aus einer sinngemäß und analogen Anwendung und Übertragung der vorstehend zum erfindungsgemäßen Fahrerassistenzsystem gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: einen schematischen Aufbau eines erfindungsgemäßen Fahrerassistenzsystems, und
- Fig. 2: einen schematischen Ablauf eines erfindungsgemäßen Verfahrens.

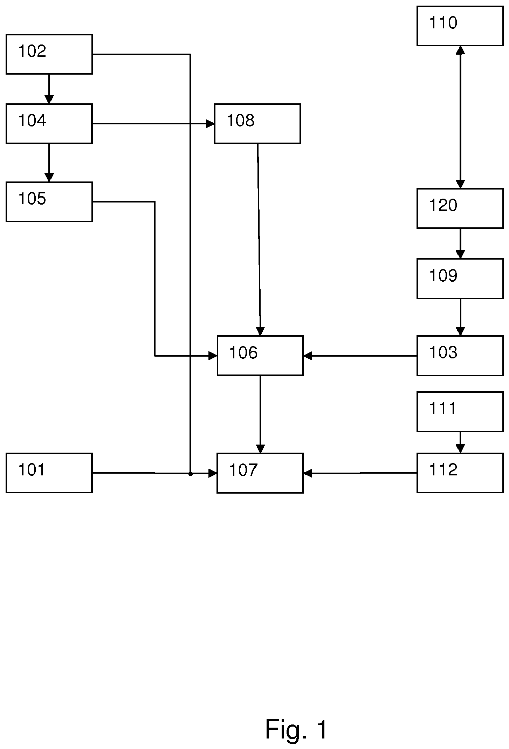

**Fig. 1** zeigt einen schematischen Aufbau eines erfindungsgemäßen Fahrerassistenzsystems zur Unterstützung eines Fahrers beim Betrieb eines Fahrzeugs F in einem Verkehrswegenetz durch eine Unterstützungsfunktion *UF.* Das Fahrerassistenzsystem umfasst eine erste Schnittstelle **101** zur Bereitstellung von Navigationsdaten *ND* zu dem Verkehrswegenetz, eine GPS-Positionserfassungseinheit **102** zur Erfassung einer Position *PF* des Fahrzeugs *F,* eine zweite Schnittstelle **103** zur Bereitstellung von zumindest folgenden ersten Daten *D1* zu Objekten *O1ᵢ,* die entlang von Verkehrswegen des Verkehrswegenetzes angeordnet sind, mit *i* = *1, 2,..., I, I ≥ 1:* Objektart *OA(O1ᵢ),* Position *POS(O1ᵢ)* und Gefährdungsindex *INDEX(O1ᵢ),* ein Sensorsystem **104,** mit dem an der Position *PF* eine aktuelle Umgebung des Fahrzeugs *F* zur Erzeugung von Umgebungsdaten *U(PF)* abtastbar ist, eine erste Auswerteeinheit **105,** mit der Daten *D2* zu Objekten *O2ₗ* ermittelbar sind, die in den Umgebungsdaten *U(PF)* abgebildet sind, wobei die Daten *D2* zu den Objekten *O2ₗ* zumindest folgende Informationen umfassen, mit *l* = *1, 2,..., L, L ≥ 0*: Objektart *OA(O2ₗ),* Position *POS(O2ₗ)* und Gefährdungsindex *INDEX(O2ₗ),* wobei der *INDEX(x)* jeweils eine Gefährdung des Fahrzeugs *F* und/oder seiner Insassen bei einer Kollision des Fahrzeugs mit dem jeweiligen Objekt *x* angibt, eine Fusionseinheit **106** zum Abgleich und zur Fusion der ersten Daten *D1* und der zweiten Daten *D2* zu dritten Daten *D3 = D3(D1, D2),* wobei die dritten Daten Objekte *O3_{y}* betreffen, die sich durch den Abgleich und die Fusion der ersten Daten *D1* und der zweiten Daten *D2* aus den Objekten *O1ᵢ* und *O2ₗ* ergeben, mit *v* = *1, 2*, ... *V, V ≥ 1, V ≤ I* + *L, und O3ᵥ ∈ {O1ᵢ, O2ₗ},* und wobei für die Objekte *O3ᵥ* basierend auf den Gefährdungsindizes *INDEX(O1ᵢ)* und *INDEX(O2ₗ)* Gefährdungsindizes *INDEX(O3ᵥ)* zugewiesen werden und eine Steuer- und/oder Regeleinheit **107** zur Ausführung der zumindest einen Unterstützungsfunktion *UF,* wobei die Unterstützungsfunktion *UF* abhängig von den dritten Daten und den Navigationsdaten *ND* ausgeführt wird *UF* = *UF(D3, PF, ND).*

Weiterhin ist eine zweite Auswerteeinheit **108** zur Ermittlung von für das Fahrzeug *F* in seiner aktuellen Umgebung gefahrlos nutzbaren Freiflächen *FFₚ* vorhanden, mit *p* = *1, 2*,..., wobei die zweite Auswerteeinheit **108** die nutzbaren Freiflächen *FFₚ* unter Berücksichtigung der Navigationsdaten *ND* und/oder der ersten Daten *D1* und/oder der zweiten Daten *D2* und/oder der dritten Daten *D3* ermittelt und die Unterstützungsfunktion *UF* abhängig von den ermittelten Freiflächen *FFₚ* ausgeführt wird *UF* = *UF(D3, PF, ND, FFₚ).* Die von der Auswerteeinheit 108 ermittelten Freiflächen *FFₚ* werden vorteilhaft von der Fusionseinheit 106 mit den Daten D1 und D2 abgeglichen.

Weiterhin ist eine Speichereinheit **109** zur Speicherung der ersten Daten *D1* und eine Empfangseinheit **120** vorhanden ist, mittels der via eine mobile Datenübertragung von einem Zentralserver **110** erste Daten *D1** zur Aktualisierung der auf der Speichereinheit **109** gespeicherten ersten *D1* übermittelbar sind

Weiterhin sind eine dritte Schnittstelle **111,** die einen aktuellen Fahrzustand *Z(t)* des Fahrzeugs *F* bereitstellt, und eine dritte Auswerteeinheit **112** vorhanden, die basierend auf dem Fahrzustand *Z(t)* ermittelt, ob der Fahrzustand *Z(t)* ein sicherer oder ein unsicherer Fahrzustand ist und im Falle, dass die dritte Auswerteeinheit **112** einen unsicheren Fahrzustand ermittelt, die Steuer- und/oder Regeleinheit **107** eine Unterstützungsfunktion *UF* ausführt, bei der ein autonomer Eingriff in die Längs- und/oder Quersteuerung/-regelung des Fahrzeugs F derart erfolgt, dass eine prädizierte Kollision des Fahrzeugs *F* mit in der Umgebung des Fahrzeugs *F* befindlichen Objekten *O3ᵥ* verhindert wird oder sofern dies nicht möglich ist, eine kontrollierte Kollision des Fahrzeugs *F* mit einem in Betracht kommenden Objekt *O3ᵥ* in der Fahrzeugumgebung gezielt herbeigeführt wird, das den relativ geringsten Gefährdungsindexwert *INDEX(O3ᵥ)* aufweist.

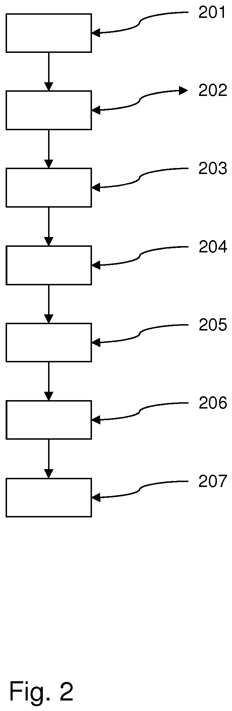

**Fig. 2** zeigt einen schematischen Ablauf eines erfindungsgemäßen Verfahrens zur Unterstützung eines Fahrers beim Betrieb eines Fahrzeugs *F* in einem Verkehrswegenetz durch eine Unterstützungsfunktion *UF.* Das Verfahren umfasst folgende Schritte. In einem Schritt **201** erfolgt ein Bereitstellen von Navigationsdaten *ND* zu dem Verkehrswegenetz. In einem weiteren Schritt **202** erfolgt ein Erfassen einer Position *PF* des Fahrzeugs *F.* In einem weiteren Schritt **203** erfolgt ein Bereitstellen von zumindest folgenden ersten Daten *D1* zu Objekten *O1ᵢ,* die entlang von Verkehrswegen des Verkehrswegenetzes angeordnet sind, *mit i* = *1, 2,..., I, I ≥ 1:*
Objektart *OA*(*O1ᵢ)*, Position *POS(O1ᵢ)* und Gefährdungsindex *INDEX(O1ᵢ).* In einem weiteren Schritt **204** erfolgt an der Position *PF* ein Abtasten einer aktuellen Umgebung des Fahrzeugs *F* zur Erzeugung von Umgebungsdaten *U(PF).*

In einem weiteren Schritt **205** erfolgt ein Ermitteln von Daten *D2* zu Objekten *O2ₗ*, die in den Umgebungsdaten *U(PF)* abgebildet sind, wobei die Daten *D2* zu den Objekten *O2ₗ* zumindest folgende Informationen umfassen, mit *l* = *1, 2,..., L, L ≥ 0*: Objektart *OA(O2ₗ),* Position *POS(O2ₗ)* und Gefährdungsindex *INDEX(O2ₗ),* wobei der *INDEX(x)* jeweils eine Gefährdung des Fahrzeugs *F* und/oder seiner Insassen bei einer Kollision des Fahrzeugs mit dem jeweiligen Objekt *x* angibt. In einem weiteren Schritt **206** erfolgt ein Abgleichen und ein Fusionieren der ersten Daten *D1* und der zweiten Daten *D2* zu dritten Daten *D3* = *D3(D1, D2),* wobei die dritten Daten Objekte *O3_{y}* betreffen, die sich durch den Abgleich und die Fusion der ersten Daten *D1* und der zweiten Daten *D2* aus den Objekten *O1ᵢ* und *O2ₗ* ergeben, mit *v* = *1, 2*, ... *V, V ≥ 1, V ≤ I* + *L,* und *O3ᵥ ∈ {O1ᵢ, O2₁},* und wobei für die Objekte *O3ᵥ* basierend auf den Gefährdungsindizes *INDEX(O1ᵢ)* und *INDEX(O2ₗ)* Gefährdungsindizes *INDEX(O3ᵥ)* zugewiesen werden. In einem weiteren Schritt **207** erfolgt ein Ausführen der zumindest einen Unterstützungsfunktion *UF,* wobei die Unterstützungsfunktion *UF* abhängig von den dritten Daten und den Navigationsdaten *ND* ausgeführt wird: *UF = UF(D3, PF, ND).*

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

### Bezugszeichenliste

- 101: erste Schnittstelle
- 102: Positionserfassungseinheit
- 103: zweite Schnittstelle
- 104: Sensorsystem
- 105: erste Auswerteeinheit
- 106: Fusionseinheit
- 107: Steuer- und/oder Regeleinheit
- 108: zweite Auswerteeinheit
- 109: Speichereinheit
- 110: Zentralserver
- 111: dritte Schnittstelle
- 112: dritte Auswerteeinheit
- 120: (Sende-/)Empfangseinheit

- 201-207: Verfahrensschritte

## Patentansprüche

1. Fahrerassistenzsystem zur Unterstützung eines Fahrers beim Betrieb eines Fahrzeugs F in einem Verkehrswegenetz durch eine Unterstützungsfunktion *UF,* umfassend:
- eine erste Schnittstelle (101) zur Bereitstellung von Navigationsdaten *ND* zu dem Verkehrswegenetz,
- eine Positionserfassungseinheit (102) zur Erfassung einer Position *PF* des Fahrzeugs *F*,
- ein Sensorsystem (104), mit dem an der Position *PF* eine aktuelle Umgebung des Fahrzeugs *F* zur Erzeugung von Umgebungsdaten *U(PF)* abtastbar ist,
- eine erste Auswerteeinheit (105), mit der Daten D2 zu Objekten *O2ₗ* ermittelbar sind, die in den Umgebungsdaten *U(PF)* abgebildet sind, und
- eine Steuer- und/oder Regeleinheit (107) zur Ausführung der zumindest einen Unterstützungsfunktion *UF,*
**dadurch gekennzeichnet, dass**
- eine zweite Schnittstelle (103) zur Bereitstellung von zumindest folgenden ersten Daten *D1* zu Objekten *O1ᵢ* vorhanden ist, die entlang von Verkehrswegen des Verkehrswegenetzes angeordnet sind, *mit i* = *1, 2,..., I, I* ≥ *1*: Objektart *OA(Olᵢ),* Position *POS(O1ᵢ)* und Gefährdungsindex *INDEX(O1ᵢ),* wobei die zweite Schnittstelle eine Schnittstelle zu einer im Fahrzeug angeordneten Speichereinheit ist, auf der die ersten Daten *D1* gespeichert sind, oder eine Schnittstelle zu einer Empfängereinheit ist, die die ersten Daten *D1* von einem Zentralrechner drahtungebunden empfängt,
- die von der Auswerteeinheit ermittelten Daten *D2* zu den Objekten *O2ₗ* zumindest folgende Informationen umfassen, mit *l* = *1, 2,..., L, L ≥ 0*: Objektart *OA(O2ₗ),* Position *POS(O2ₗ)* und Gefährdungsindex *INDEX(O2ₗ),* wobei der *INDEX(x)* jeweils eine Gefährdung des Fahrzeugs *F* und/oder seiner Insassen bei einer Kollision des Fahrzeugs mit dem jeweiligen Objekt *x* angibt,
- eine Fusionseinheit (106) zum Abgleich und zur Fusion der ersten Daten *D1* und der zweiten Daten *D2* zu dritten Daten *D3* = *D3(D1, D2)* vorhanden ist, wobei die dritten Daten Objekte *O3_{y}* betreffen, die sich durch den Abgleich und die Fusion der ersten Daten *D1* und der zweiten Daten *D2* aus den Objekten *O1ᵢ* und *O2ₗ* ergeben, mit v = *1,* 2, ... *V, V ≥ 1, V ≤ I* + *L, und O3ᵥ ∈ {O1ᵢ, O2ₗ},* und wobei für die Objekte *O3ᵥ* basierend auf den Gefährdungsindizes *INDEX(O1ᵢ)* und *INDEX(O2ₗ)* Gefährdungsindizes *INDEX(O3ᵥ)* zugewiesen werden, und
wobei die Unterstützungsfunktion *UF* abhängig von den dritten Daten und den Navigationsdaten *ND* ausgeführt wird *UF* = *UF(D3, PF, ND).*

2. Fahrerassistenzsystem nach Anspruch 1,
**dadurch gekennzeichnet, dass** im Fall, dass für ein Objekt *O2ₗ* kein eindeutiger Gefährdungsindex *INDEX(O2ₗ)* ermittelbar ist, dem jeweiligen Objekt *O2ₗ* ein *INDEX(O2ₗ)* zugeordnet wird, der dem Indexwert mit der höchsten Gefährdung des Fahrzeugs *F* und/oder seiner Insassen bei einer Kollision des Fahrzeugs mit dem jeweiligen Objekt *O2ₗ* entspricht.

3. Fahrerassistenzsystem nach Anspruch 1 oder 2,
dadurch gekenzeichnet, dass eine zweite Auswerteeinheit (108) zur Ermittlung von für das Fahrzeug *F* in seiner aktuellen Umgebung gefahrlos nutzbaren Freiflächen *FFₚ* vorhanden ist, mit *p* = *1,* 2,..., wobei die zweite Auswerteeinheit (108) die nutzbaren Freiflächen *FFₚ* unter Berücksichtigung der Navigationsdaten *ND* und/oder der ersten Daten *D1* und/oder der zweiten Daten *D2* und/oder der dritten Daten D3 ermittelt und die Unterstützungsfunktion *UF* abhängig von den ermittelten Freiflächen *FFₚ* ausgeführt wird *UF = UF(D3, PF, ND, FFₚ).*

4. Fahrerassistenzsystem nach einem der Ansprüche 1 bis 3,
**dadurch gekennzeichnet, dass** eine Speichereinheit (109) zur Speicherung der ersten Daten *D1,* und eine Empfangseinheit (120) vorhanden ist, mittels der via eine mobile Datenübertragung von einem Zentralserver (110) erste Daten *D1** zur Aktualisierung der auf der Speichereinheit (109) gespeicherten ersten *D1* übermittelbar sind.

5. Fahrerassistenzsystem nach einem der Ansprüche 1 bis 4
**dadurch gekennzeichnet, dass** die Fusionseinheit (106) eine Korrespondenzprüfung der ersten Daten *D1* und der zweiten Daten *D2* ausführt und bei Widersprüchen den jeweiligen zweiten Daten *D2* Priorität einräumt.

6. Fahrerassistenzsystem nach einem der Ansprüche 1 bis 5,
**dadurch gekennzeichnet, dass** die zumindest eine Unterstützungsfunktion *UF* eine oder mehrere der folgenden Funktionen umfasst:
- eine Ausgabe einer Information (Warnung, Hinweis, optisch, akustisch, haptisch),
- eine Aktivierung oder eine Deaktivierung eines Fahrzeugsystems oder einer Fahrzeugfunktion,
- ein autonomer Eingriff in die Längs- und/oder Quersteuerung/-regelung des Fahrzeugs.

7. Fahrerassistenzsystem nach einem der Ansprüche 1 bis 6,
**dadurch gekennzeichnet, dass**
- eine dritte Schnittstelle (111) einen aktuellen Fahrzustand *Z(t)* des Fahrzeugs *F* bereitstellt,
- eine dritte Auswerteeinheit (112) basierend auf dem Fahrzustand *Z(t)* ermittelt, ob der Fahrzustand *Z(t)* ein sicherer oder ein unsicherer Fahrzustand ist, und im Falle, dass die dritte Einheit einen unsicheren Fahrzustand ermittelt, die Steuer- und/oder Regeleinheit (107) eine Unterstützungsfunktion *UF* ausführt, bei der ein autonomer Eingriff in die Längs- und/oder Quersteuerung/-regelung des Fahrzeugs F derart erfolgt, dass eine prädizierte Kollision des Fahrzeugs *F* mit in der Umgebung des Fahrzeugs *F* befindlichen Objekten *O3ᵥ* verhindert wird oder sofern dies nicht möglich ist, eine kontrollierte Kollision des Fahrzeugs F mit einem in Betracht kommenden Objekt *O3ᵥ* in der Fahrzeugumgebung gezielt herbeigeführt wird, das den relativ geringsten Gefährdungsindexwert *INDEX(O3ᵥ)* aufweist.

8. Fahrerassistenzsystem nach einem der Ansprüche 1 bis 7,
**dadurch gekennzeichnet, dass** die vom Sensorsystem (104) erfassten Umgebungsdaten *U(PF)* ein oder mehrere der folgenden Informationen umfassen:
- 3D-Form der Objekte *O2ₗ*,
- Art der Objekte *O2ₗ*,
- relative Positionierung der Objekte *O2ₗ* zum Fahrzeug,
- dynamischer Zustand der Objekte *O2ₗ,*
- meteorologischer Zustand in der Fahrzeugumgebung,
- Art und Zustand der Erdoberfläche in der Fahrzeugumgebung
- Art und Zustand des vom Fahrzeug F befahrenen Verkehrswegs.

9. Fahrerassistenzsystem nach einem der Ansprüche 1 bis 8,
**dadurch gekennzeichnet, dass** eine Einheit zur Ermittlung einer von der aktuellen Position *PF* des Fahrzeugs *F* ausgehenden wahrscheinliche Fahrtroute *FR* des Fahrzeugs *F,* eine dritte Schnittstelle (111) zur Bereitstellung eines aktuellen Fahrzustands *Z(t)* des Fahrzeugs, und eine Prädiktionseinheit vorhanden ist, wobei die Prädiktionseinheit war auf Basis der Fahrtroute *FR,* des aktuellen Fahrzustandes *Z(t)* und der dritten Daten *D3* ein Risiko *R* ermittelt, mit *R* = *R(FR, Z(t), D3),* das für die dem Fahrzeug *F* voraus liegende Fahrtroute *FR* eine Wahrscheinlichkeit für ein Auftreten einer kritischen Fahrsituation angibt, wobei das ermittelte Risiko *R* ausgegeben wird und im Fall des Eintretens der kritischen Fahrsituation die Steuer- und/oder Regeleinheit (107) eine Unterstützungsfunktion *UF* ausführt, bei der ein autonomer Eingriff in die Längs- und/oder Quersteuerung/- regelung des Fahrzeugs *F* derart erfolgt, dass eine prädizierte Kollision des Fahrzeugs *F* mit in der Umgebung des Fahrzeugs *F* befindlichen Objekten *O3ᵥ* verhindert wird oder sofern dies nicht möglich ist, eine kontrollierte Kollision des Fahrzeugs *F* mit einem in Betracht kommenden Objekt *O3ᵥ* in der Fahrzeugumgebung gezielt herbeigeführt wird, das den relativ geringsten Gefährdungsindexwert *INDEX(O3ᵥ)* aufweist.

10. Verfahren zur Unterstützung eines Fahrers beim Betrieb eines Fahrzeugs *F* in einem Verkehrswegenetz durch eine Unterstützungsfunktion *UF* mit den Schritten:
- Bereitstellen (201) von Navigationsdaten *ND* zu dem Verkehrswegenetz,
- Erfassen (202) einer Position *PF* des Fahrzeugs *F,*
- Bereitstellen (203) von zumindest folgenden ersten Daten *D1* zu Objekten *O1ᵢ,* die entlang von Verkehrswegen des Verkehrswegenetzes angeordnet sind, *mit i* = *1, 2,..., I, I ≥ 1:*
∘ Objektart *OA(O1ᵢ),*
∘ Position *POS(O1ᵢ)* und
∘ Gefährdungsindex *INDEX(O1ᵢ),* wobei die ersten Daten *D1* von einer im Fahrzeug angeordneten Speichereinheit bereitgestellt werden, oder von einer Empfängereinheit bereitgestellt werden, die die ersten Daten *D1* von einem Zentralrechner drahtungebunden empfängt,
- an der Position *PF* Abtasten (204) einer aktuellen Umgebung des Fahrzeugs *F* zur Erzeugung von Umgebungsdaten *U(PF),*
- Ermitteln (205) von Daten *D2* zu Objekten *O2ₗ*, die in den Umgebungsdaten *U(PF)* abgebildet sind, wobei die Daten *D2* zu den Objekten *O2ₗ* zumindest folgende Informationen umfassen, mit *l* = *1, 2,..., L, L ≥ 0*:
∘ Objektart *OA(O2ₗ),*
∘ Position *POS(O2ₗ)* und
∘ Gefährdungsindex *INDEX(O2ₗ),*
wobei der *INDEX(x)* jeweils eine Gefährdung des Fahrzeugs *F* und/oder seiner Insassen bei einer Kollision des Fahrzeugs mit dem jeweiligen Objekt *x* angibt,
- Abgleichen und Fusionieren (206) der ersten Daten *D1* und der zweiten Daten *D2* zu dritten Daten *D3* = *D3(D1, D2),* wobei die dritten Daten Objekte *O3_{y}* betreffen, die sich durch den Abgleich und die Fusion der ersten Daten *D1* und der zweiten Daten D2 aus den Objekten *O1ᵢ* und *O2ₗ* ergeben, mit *v* = *1,* 2, ... *V, V ≥ 1, V ≤ I* + *L,* und *O3ᵥ ∈ {O1ᵢ, O2ₗ},* und wobei für die Objekte *O3ᵥ* basierend auf den Gefährdungsindizes *INDEX(O1ᵢ)* und *INDEX(O2ₗ)* Gefährdungsindizes *INDEX(O3ᵥ)* zugewiesen werden, und
- Ausführen (207) der zumindest einen Unterstützungsfunktion *UF,* wobei die Unterstützungsfunktion *UF* abhängig von den dritten Daten und den Navigationsdaten *ND* ausgeführt wird: *UF* = *UF(D3, PF, ND).*

## Claims

1. Driver assistance system for supporting a driver when operating a vehicle *V* in a road network by means of a support function *SF,* comprising:
- a first interface (101) for providing navigation data *ND* on the road network,
- a position detection unit (102) for detecting a position *PV* of the vehicle *V,*
- a sensor system (104), with which the current surroundings of the vehicle *V* can be scanned at the position *PV* for producing environmental data *E(PV),*
- a first evaluation unit (105), with which data *D2* on objects *O2ₗ* can be identified, which are displayed in the environmental data *E(PV),* and
- a control and/or regulating unit (107) for performing the at least one support function *SF,*
**characterized in that**
- a second interface (103) for providing at least the following first data *D1* on objects *O1ₗ* is available, which are arranged along traffic routes of the road network, with *i* = *1, 2,..., 1, 1* ≥ *1:* object type *OT(O1ₗ),* position *POS(O1ₗ)* and danger index *INDEX(O1ₗ)*, wherein the second interface is an interface to a storage unit arranged in the vehicle, on which the first data *D1* are saved, or an interface to a receiver unit, which wirelessly receives the first data *D1* from a central computer,
- the data *D2* on the objects *O2ₗ* identified by the evaluation unit comprise at least the following information, with *l* = *1, 2,..., L, L* ≥ *0:* object type *OT(O2ₗ),* position *POS(O2ₗ)* and danger index *INDEX(O2ₗ)*, wherein the *INDEX(x)* respectively indicates a danger for the vehicle *V* and/or its occupants in the case of a collision between the vehicle and the respective object x,
- a merging unit (106) for comparing and merging the first data *D1* and the second data *D2* to third data *D3* = *D3(D1, D2)* is available, wherein the third data relate to objects *O3_{y},* which result from the objects *O1ₗ* and *O2ₗ* as a result of the comparison and merging of the first data *D1* and the second data *D2,* with *v* = *1, 2,* ... *V, V* ≥ *1, V* ≤ *1* + *L,* and *O3ᵥ ∈ {O1ᵢ, O2ₗ},* and wherein danger indices *INDEX(O3ᵥ)* are assigned for the objects *O3ᵥ* based on the danger indices *INDEX(O1ₗ)* and *INDEX(O2ₗ)*, and
wherein the support function SF is performed depending on the third data and the navigation data *ND SF* = *SF(D3, PV, ND).*

2. Driver assistance system according to Claim 1,
**characterized in that** in case an unambiguous danger index *INDEX(O2ₗ)* cannot be determined for an object *O2ₗ,* an *INDEX(O2ₗ)* is assigned to the respective object *O2ₗ,* which corresponds to the index value with the highest danger for the vehicle *V* and/or its occupants in the case of a collision between the vehicle and the respective object *O2ₗ*.

3. Driver assistance system according to Claim 1 or 2,
**characterized in that** a second evaluation unit (108) for determining open spaces *OSₚ* which can be safely used for the vehicle *V* in its current surroundings is available, with *p* = *1, 2,...,* wherein the second evaluation unit (108) determines the open spaces *OSₚ* that can be used taking into account the navigation data *ND* and/or the first data *D1* and/or the second data *D2* and/or the third data *D3,* and the support function SF is performed depending on the determined open spaces *OSₚ SF* = *SF(D3, PV, ND, OSₚ).*

4. Driver assistance system according to one of Claims 1 to 3,
**characterized in that** a storage unit (109) for storing the first data *D1,* and a receiver unit (120) is available, by means of which first data *D1** for updating the first *D1* saved on the storage unit (109) can be sent via a mobile data transmission from a central server (110).

5. Driver assistance system according to one of Claims 1 to 4,
**characterized in that** the merging unit (106) carries out a correspondence check of the first data *D1* and the second data *D2* and gives priority to the respective second data *D2* in the case of discrepancies.

6. Driver assistance system according to one of Claims 1 to 5,
**characterized in that** the at least one support function *SF* comprises one or a plurality of the following functions:
- issuing an item of information (warning, information, visual, audible, haptic),
- activating or deactivating a vehicle system or a vehicle function,
- automatic intervention in the longitudinal and/or transverse control/regulation of the vehicle.

7. Driver assistance system according to one of Claims 1 to 6,
**characterized in that**
- a third interface (111) provides a current driving state *S(t)* of the vehicle *V,*
- a third evaluation unit (112) determines, on the basis of the driving state *S(t)* whether the driving state *S(t)* is a safe or an unsafe driving state, and if the third unit determines an unsafe driving state, the control and/or regulating unit (107) performs a support function *SF,* in which automatic intervention in the longitudinal and/or transverse control/regulation of the vehicle V occurs in such a manner that a predicted collision between the vehicle *V* and objects *O3ᵥ* located in the surroundings of the vehicle *V* is prevented, or if this is not possible, a controlled collision between the vehicle *V* and an object *O3ᵥ* being considered is brought about in a targeted manner in the vehicle surroundings, which object *O3ᵥ* has the relatively lowest danger index value *INDEX(O3ᵥ)*.

8. Driver assistance system according to one of Claims 1 to 7,
**characterized in that** the environmental data *E(PV)* detected by the sensor system (104) comprise one or a plurality of the following items of information:
- 3D shape of the objects *O2ₗ,*
- type of the objects *O2ₗ,*
- relative positioning of the objects *O2ₗ* to the vehicle,
- dynamic state of the objects *O2ₗ,*
- meteorological state in the vehicle surroundings,
- type and state of the ground surface in the vehicle surroundings,
- type and state of the traffic route driven by the vehicle V.

9. Driver assistance system according to one of Claims 1 to 8,
**characterized in that** a unit for determining a probable driving route *DR* of the vehicle *V* based on the current position *PV* of the vehicle *V,* a third interface (111) for providing a current driving state *S(t)* of the vehicle, and a prediction unit are available, wherein the prediction unit determines a risk *R* based on the driving route *DR,* the current driving state *S(t)* and the third data *D3,* with *R* = *R(DR, S(t)*, *D3),* which risk *R* indicates the probability of critical driving conditions occurring for the driving route *DR* lying ahead of the vehicle *V,* wherein the determined risk *R* is output and if the critical driving conditions occur, the control and/or regulating unit (107) performs a support function *SF,* in which automatic intervention in the longitudinal and/or transverse control/regulation of the vehicle V occurs in such a manner that a predicted collision between the vehicle *V* and objects *O3ᵥ* located in the surroundings of the vehicle *V* is prevented, or if this is not possible, a controlled collision between the vehicle *V* and an object *O3ᵥ* being considered is brought about in a targeted manner in the vehicle surroundings, which object *O3ᵥ* has the relatively lowest danger index value *INDEX(O3ᵥ).*

10. Method for supporting a driver when operating a vehicle *V* in a road network by means of a support function SF having the steps:
- providing (201) navigation data *ND* on the road network,
- detecting (202) a position *PV* of the vehicle *V,*
- providing (203) at least the following first data D1 on objects *O1ₗ*, which are arranged along traffic routes of the road network, with *i* = *1, 2,..., 1, 1 ≥ 1:*
∘ object type *OT(O1ₗ)*,
∘ position *POS(O1ₗ)* and
∘ danger index *INDEX(O1ₗ),* wherein the first data *D1* are provided by a storage unit arranged in the vehicle, or are provided by a receiver unit, which wirelessly receives the first data *D1* from a central computer,
- scanning (204) the current surroundings of the vehicle *V* at the position *PV* for producing environmental data *E(PV),*
- identifying (205) data *D2* on objects *O2ₗ,* which are displayed in the environmental data *E(PV),* wherein the data *D2* on the objects *O2ₗ* comprise at least the following information, with 1 = *1, 2,..., L, L* ≥ *0:*
∘ object type *OT(O2ₗ),*
∘ position *POS(O2ₗ)* and
∘ danger index *INDEX(O2ₗ)*,
wherein the *INDEX(x)* respectively indicates a danger for the vehicle *V* and/or its occupants in the case of a collision between the vehicle and the respective object x,
- comparing and merging (206) the first data *D1* and the second data *D2* to third data *D3* = *D3(D1, D2),* wherein the third data relate to objects *O3_{y},* which result from the objects *O1ₗ* and *O2ₗ* as a result of the comparison and merging of the first data *D1* and the second data *D2,* with *v* = *1, 2,* ... *V, V* ≥ *1, V ≤ 1* + *L,* and *O3ᵥ c {O1ₗ, O2ₗ},* and wherein danger indices *INDEX(O3ᵥ)* are assigned for the objects *O3ᵥ* based on the danger indices *INDEX(O1ₗ)* and *INDEX(O2ₗ),* and
- performing (207) the at least one support function *SF,* wherein the support function *SF* is performed depending on the third data and the navigation data *ND SF* = *SF(D3, PV, ND).*

## Revendications

1. Système de support du conducteur destiné à assister un conducteur lors de l'utilisation d'un véhicule *F* dans un réseau de circulation par une fonction d'assistance *UF,* comprenant :
- une première interface (101) destinée à préparer des données de navigation *ND* par rapport au réseau de circulation,
- une unité de saisie de position (102) pour la saisie d'une position *PF* du véhicule *F,*
- un système de détection (104) avec lequel à la position *PF,* il est possible d'explorer un environnement actuel du véhicule *F* pour produire des données d'environnement *U(PF),*
- une première unité d'évaluation (105) avec laquelle des données *D2* pour les objets *02* peuvent être déterminées, qui sont reproduites dans les données d'environnement *U(PF),* et
- une unité de commande et/ou de régulation (107) pour exécuter au moins une fonction d'assistance *UF,*
**caractérisé en ce que**
- une deuxième interface (103) est présente pour préparer au moins les premières données suivantes *D1* pour les objets *01ᵢ,* qui sont disposés le long des voies de circulation du réseau de circulation, avec *i* = *1,2,...1,1* ≥ *1* : type d'objet *0A(01ᵢ),* position *POS(01ᵢ)* et indice de mise en danger *INDEX(01ᵢ),* sachant que la deuxième interface est une interface pour une unité de mémorisation disposée dans le véhicule sur laquelle les premières données *D1* sont mémorisées ou une interface est pour une unité de réception, qui reçoit sans liaison par fil les premières données *D1* d'un ordinateur central,
- les données *D2* déterminées par l'unité d'évaluation pour les objets *02* comprennent au moins les informations suivantes, avec *l* = *1, 2*, *...,L, L, ≥ 0* : type d'objet *0A(02₁),* position *POS(02l)* et indice de mise en danger *INDEX(02ₗ),* sachant que l'*INDEX(x)* indique respectivement une mise en danger du véhicule F et/ou de ses occupants lors d'une collision du véhicule avec l'objet x,
- il existe une unité de fusion (106) pour égaliser et pour fusionner les premières données D1 et les deuxièmes données *D2* par rapport aux troisièmes données *D3* = *D3(D1, D2),* sachant que les troisièmes données concernent les objets *03,* qui sont obtenues par l'égalisation et la fusion des premières données *D1* et des deuxièmes données D2 à partir des objets *01ᵢ* et *02ₗ,* avec *v* = *1,2,...V, V≥1, V≥1 + L et 03ᵥ ε (01ᵢ,02ₗ*) et sachant que pour les objets *03,* les indices de mise en danger *INDEX(03ᵥ)* sont attribués en se basant sur les indices de mise en danger *INDEX (01ᵢ)* et *INDEX(02ₗ),* et
sachant que la fonction d'assistance *UF* est exécutée *UF*= *UF(D3, PF, ND)* indépendamment des troisièmes données et des données de navigation *ND.*

2. Système de support du conducteur selon la revendication 1,
**caractérisé en ce qu'**au cas où pour un objet *O2ₗ* aucun indice de mise en danger *INDEX(O2ₗ)* certain ne peut être déterminé, un *INDEX(O2ₗ)* est attribué à l'objet respectif *O2ₗ,* qui correspond à la valeur d'indice avec la mise en danger maximale du véhicule *F* et/ou de ses occupants lors d'une collision du véhicule avec l'objet respectif *O2ₗ*.

3. Système de support du conducteur selon la revendication 1 ou 2,
**caractérisé en ce qu'**il existe une deuxième unité d'évaluation (108) pour déterminer des surfaces libres *FFₚ* utilisables sans danger pour le véhicule *F* dans son environnement actuel avec *p* = *1,2...,,* sachant que la deuxième unité d'évaluation (108) détermine les surfaces libres utilisables *FFₚ* en tenant compte des données de navigation ND et/ou des premières données *D1* et/ou des deuxièmes données D2 et/ou des troisièmes données D3 et la fonction d'assistance *UF* est exécutée *UF* = *UF(D3, PF, ND, FFp)* indépendamment des surfaces libres déterminées *FFₚ.*

4. Système de support du conducteur selon l'une quelconque des revendications 1 à 3,
**caractérisé en ce qu'**il existe une unité de mémorisation (109) pour mémoriser les premières données *D1* et une unité de réception (120) au moyen desquelles via une transmission de données mobile d'un serveur central (110), les premières données *D1** peuvent être transmises pour actualisation des premières *D1* mémorisées sur l'unité de mémorisation (109) .

5. Système de support du conducteur selon l'une quelconque des revendications 1 à 4,
**caractérisé en ce que** l'unité de fusion (106) exécute un contrôle de correspondance des premières données *D1* et des deuxièmes données *D2* et accorde une priorité aux deuxièmes données respectives *D2* en cas de désaccords.

6. Système de support du conducteur selon l'une quelconque des revendications 1 à 5,
**caractérisé en ce qu'**au moins une fonction d'assistance *UF* comprend une ou plusieurs des fonctions suivantes :
- une édition d'une information (avertissement, instruction, optique, acoustique, haptique),
- une activation ou une désactivation d'un système embarqué ou d'une fonction du véhicule,
- une intervention autonome dans la régulation/commande longitudinale et/ou transversale du véhicule.

7. Système de support du conducteur selon l'une quelconque des revendications 1 à 6,
**caractérisé en ce qu'**
- une troisième interface (111) prépare un état de conduite actuel *Z(t)* du véhicule *F,*
- une troisième unité d'évaluation (112) détermine en sa basant sur l'état de conduite *Z(t),* si l'état de conduite *Z(t*) est un état de conduite sûr ou incertain et au cas où la troisième unité détermine un état de conduite incertain, l'unité de commande et/ou de régulation (107) exécute une fonction d'assistance *UF* pour laquelle une intervention autonome a lieu dans la commande/régulation longitudinale et/ou transversale du véhicule *F* de telle manière qu'une collision prévue du véhicule *F* avec des objets *03ᵥ* se trouvant dans l'environnement du véhicule *F* est évitée ou dans la mesure où cela n'est pas possible, une collision contrôlée du véhicule *F* avec un objet *03ᵥ* pris en considération est provoquée de façon précise dans l'environnement du véhicule qui comporte la valeur d'indice de mise en danger *INDEX(03ᵥ)* relativement la plus faible.

8. Système de support du conducteur selon l'une quelconque des revendications 1 à 7,
**caractérisé en ce que** les données d'environnement *U(PF)* saisies par le système de détection (104) comprennent une ou plusieurs des informations suivantes :
- forme tridimensionnelle des objets *02ₗ,*
- type des objets *02ₗ,*
- positionnement relatif des objets *02ₗ* par rapport au véhicule,
- état dynamique des objets *02ₗ,*
- état météorologique dans l'environnement du véhicule,
- type et état de la surface du sol dans l'environnement du véhicule,
- type et état de la voie de circulation parcourue par le véhicule *F.*

9. Système de support du conducteur selon l'une quelconque des revendications 1 à 8,
**caractérisé en ce qu'** il existe une unité de détermination d'un des itinéraires *FR* du véhicule *F* vraisemblables partant de la position actuelle *PF* du véhicule *F,* une troisième interface (111) de préparation d'un état de conduite actuel *(Z(t)* du véhicule et une unité de prévision, sachant que l'unité de prévision détermine un risque *R* sur la base de l'itinéraire *FR,* de l'état de conduite actuel (Z(t) et des troisièmes données D3 avec *R* = *R(FR, Z(t), D3)* qui indique une probabilité d'une survenance d'une situation de conduite critique pour l'itinéraire *FR* précédant le véhicule *F,* sachant que le risque *R* déterminé est émis et en cas de survenance de la situation de conduite critique, l'unité de commande et/ou de régulation (107) exécute une fonction d'assistance *UF* pour laquelle une intervention autonome a lieu dans la commande/régulation longitudinale et/ou transversale du véhicule *F* de telle manière qu'une collision prévue du véhicule *F* avec des objets *Q3ᵥ* se trouvant dans l'environnement du véhicule *F* est évitée ou dans la mesure où cela n'est pas possible, une collision contrôlée du véhicule *F* avec un objet *03ᵥ* pris en considération est provoquée de façon précise dans l'environnement du véhicule, qui comporte la valeur d'indice de mise en danger *INDEX(O3ᵥ)* relativement la plus faible.

10. Procédé de support d'un conducteur lors de l'utilisation d'un véhicule *F* dans un réseau de circulation par une fonction de support *UF* avec les étapes de :
- préparation (201) de données de navigation *ND* par rapport au réseau de circulation ,
- saisie (202) d'une position *PF* du véhicule *F,*
- préparation (203) d'au moins les premières données suivantes *Dl* pour les objets *01ᵢ* qui sont disposés le long des voies de circulation du réseau de circulation , avec *i* = *1, 2,..., I, I ≥* 1 :
∘ type d'objet *0A(01ᵢ),*
∘ position *POS(01ᵢ),* et
∘ indice de mise en danger *INDEX(01ᵢ),* sachant que les premières données *D1* sont préparées par une unité de mémorisation disposée dans le véhicule, ou sont préparées par une unité de réception, qui reçoit sans liaison par fil les premières données *D1* d'un ordinateur central,
- à la position *PF,* exploration (204) d'un environnement actuel du véhicule F pour produire des données d'environnement *U(PF),*
- détermination (205) de données D2 pour les objets 02ₗ, qui sont reproduites dans les données d'environnement *U(PF),* sachant que les données D2 pour les objets 02 comprennent au moins les informations suivantes avec *l* = *1,2,...L,L ≥0* :
∘ type d'objet *0A(02ₗ),*
∘ position *POS(02ₗ),* et
∘ indice de mise en danger *INDEX(02ₗ),*
sachant que *l'INDEX(x)* indique respectivement une mise en danger du véhicule *F* et/ou de ses occupants lors d'une collision du véhicule avec l'objet respectif *x,*
- égalisation et fusion (206) des premières données D1 et des deuxièmes données *D2* par rapport aux troisièmes données *D3* = *D3(D1, D2),* sachant que les troisièmes données concernent des objets *03ᵥ*, qui sont obtenues par l'égalisation et la fusion des premières données *D1* et des deuxièmes données *D2* à partir des objets *01ᵢ et 02ₗ* avec *v* = *1,2,... V,V≥1, V≤1 + L, et 03ᵥ ε (01ᵢ, 02ₗ*) et sachant que pour les objets 03 les indices de mise en danger *INDEX (03ᵥ)* sont attribués en se basant sur les indices de mise en danger *INDEX (01ᵢ)* et *INDEX(02ₗ),* et
- exécution (207) d'au moins une fonction d'assistance *UF,* sachant que la fonction d'assistance *UF* est exécutée : *UF* = *UF(D3, PF, ND)* indépendamment des troisièmes données et des données de navigation *ND.*
